# FASCICULE DE BREVET EUROPEEN

(11) **EP 1 570 131 B1**
(45) Date de publication et mention de la délivrance du brevet: **23.05.2007**
(21) Numéro de dépôt: 03815107.2
(22) Date de dépôt: 10.12.2003
(51) Int. Cl.: E02B 15/04

(54) **DISPOSITIF DE RAMASSAGE D'ARTICLES FLOTTANTS FLOTTANT A LA SURFACE DE LA MER**
VORRICHTUNG ZUM AUFFANGEN VON AUF DER MEERESOBERFLÄCHE SCHWIMMENDEN GEGENSTÄNDEN
DEVICE FOR COLLECTING ITEMS FLOATING AT THE SURFACE OF THE SEA

(30) Priorité: 13.12.2002 FR 0215870; 21.07.2003 FR 0308853
(43) Date de publication de la demande: 07.09.2005
(73) Titulaire: Thomazeau, Thierry, 85270 Saint Hilaire de Riez (FR)
(72) Inventeur: Thomazeau, Thierry, 85270 Saint Hilaire de Riez (FR)
(74) Mandataire: Laget, Jean-Loup
(86) Numéro de dépôt international: PCT/FR2003/003652
(87) Numéro de publication internationale: WO 2004/063474

(56) Documents cités:
- EP-A- 0 821 106
- FR-A- 2 383 272
- FR-A- 2 816 969
- GB-A- 2 044 623
- GB-A- 2 095 571
- US-A- 3 557 960

## Description

La présente invention concerne un dispositif de ramassage d'articles flottants, tels que des hydrocarbures, des conteneurs, des macro déchets et autres, flottant à la surface d'un milieu aqueux, tel que mer, rivière...

Pour récupérer en mer des produits flottants, il existe actuellement diverses techniques choisies en fonction du type de produits à recueillir.

Ainsi, pour les nappes d'hydrocarbures dues au dégazage sauvage de navires ou au naufrage de pétroliers, on utilise des bateaux à pompe pour recueillir les hydrocarbures flottants.

Ce type de dispositif de pompage présente l'inconvénient de ne pas être rapide et de ne pas permettre le pompage de grandes quantités d'hydrocarbures surtout lorsqu'ils sont trop visqueux.

On a proposé alors des dispositifs de pompage qui permettent au préalable un guidage des hydrocarbures vers un lieu de pompage circonscrit de manière à faciliter ledit pompage.

Ainsi, dans FR-A-2 383 272, on propose un dispositif de captage du pétrole, comprenant un sac en matériau imperméable s'étendant généralement horizontalement et tiré par au moins un navire. Ce dispositif comporte également deux pannes (bras) fixées à l'ouverture du sac et s'étendant vers l'extérieur et l'avant du sac dans le sens de remorquage. Les pannes comprennent chacune un organe flottable ayant de préférence la forme d'un tuyau gonflable. Les pannes sont raccordées côté ouverture à un organe flottable s'étendant le long de l'ouverture du sac. Le sac comporte un second organe flottable s'étendant en V depuis les extrémités avant des pannes et la partie arrière du sac. Cette structure gonflable en V permet de conférer au dispositif une résistance mécanique et une stabilité améliorées sans lui enlever sa souplesse. Ladite structure en V est constituée d'un tuyau gonflable contenu partiellement dans le sac et fixé à la partie supérieure du sac.

Cependant, un tel dispositif présente un inconvénient majeur dans la mesure où la structure gonflable étant liée à la poche, il n'est pas possible de désolidariser la poche pour réutiliser la structure avec une autre poche. Par conséquent, pour pouvoir réutiliser le dispositif il convient de pomper son contenu. Ceci a pour résultat qu'un tel dispositif est très onéreux car il nécessite soit le pompage du contenu de la poche en vue de sa réutilisation soit le remplacement complet du dispositif si celui-ci ne subit pas de pompage. Dans les deux cas, même si les hydrocarbures sont guidés vers une poche de récolte, le matériau constituant cette poche étant imperméable, l'eau emprisonnée également avec les hydrocarbures limite l'efficacité de la récolte d'hydrocarbures.

Dans US-A-5 531 890, on a proposé un dispositif comprenant des pannes de confinement guidant le pétrole vers un écrémeur puis vers un réservoir de séparation pétrole/eau dans lequel un matériau polymère absorbe le pétrole- Ce dispositif est équivalent à un dispositif de pompage du pétrole, c'est-à-dire difficile à mettre en oeuvre par gros temps en mer.

Dans US-A-3 771 662, le dispositif décrit comprend une ligne de barrage tractée par deux bateaux de manière à recueillir le pétrole et à l'emprisonner. On propose donc de ratisser le pétrole à la surface de l'eau avant de pouvoir le pomper.

Dans WO/02 12636, on propose un dispositif pour piéger les nappes de pétrole, l'entrée étant formée en entonnoir pour amener le pétrole vers un réservoir où il est stocké ensuite pour le pomper.

Le brevet US-A-3.557.960 décrit un dispositif de captage du pétrole constitué d'une poche de filtration prolongée d'un réservoir de collecte des hydrocarbures ainsi ramassés. L'ensemble est maintenu au niveau de la surface de l'eau par l'intermédiaire d'éléments gonflables introduits à l'intérieur de ladite poche. Une installation de pompage parallèle est prévue pour éliminer les hydrocarbures contenus dans la partie de la poche imperméable à l'eau, disposée dans le prolongement de la partie poche de filtration.

Aucun des dispositifs précédemment décrits ne propose une récolte sans pompage des hydrocarbures et à l'aide d'un dispositif simple et économique.

Le document GB-A-2.095.571 décrit quant à lui un dispositif de ramassage constitué d'un filet d'amenée et d'un filet de collecte reliés entre eux par un dispositif de liaison rigide. Les hydrocarbures sont destinés à être stockés dans le dispositif de collecte tandis que le dispositif d'amenée est couplé à un flanc du bateau. En raison du poids créé par l'ensemble du dispositif le long d'un flanc du bateau, il est à craindre un chavirage du bateau. En outre, comme la structure du bateau participe au maintien de l'embouchure de la poche en position ouverte, cette ouverture ne pourra être garantie en cas de mauvais temps. Enfin, un tel montage nécessite un aménagement particulier du bateau.

Par ailleurs, pour les autres produits, il convient de trouver d'autres dispositifs de ramassage dont on constate qu'ils ne sont pas très efficaces lors de marée noire de très grande envergure.

De plus, la multiplication de ces dispositifs multiples et variés en fonction de l'objet augmente les coûts (un dispositif en fonction de chaque type de produit à ramasser).

On a également proposé un dispositif de ramassage comportant une poche allongée du type « chaussette » dont l'embouchure est montée sur un anneau rigide, cet anneau étant porté par des bras rigides flottants montés de chaque côté de l'anneau et maintenant celui-ci dans un plan vertical par rapport à la surface de la mer. Ce dispositif s'étend entre deux bateaux, l'ouverture de la poche se trouvant à la surface et recueillant les hydrocarbures se trouvant à la surface. Cependant, dans ce dispositif, hormis l'ouverture de la poche qui est maintenue de manière rigide, le reste de ladite poche se trouve sous l'eau et on a pu remarquer que le dispositif ne montre pas toute l'efficacité que l'on pouvait en attendre. De plus, cette structure rigide est encombrante et ne peut pas être facilement transportée pour un usage rapide.

Afin de pallier ces inconvénients, la présente invention a pour but de proposer un dispositif de ramassage de produits flottants en pleine mer mais également pouvant être utilisé en rade, dans des estuaires, des ports, des rivières, c'est-à-dire partout où cela est possible et nécessaire et qui est facile à utiliser et à transporter pour une intervention rapide.

A cet effet, l'invention a pour objet un dispositif de ramassage d'articles divers, tels que déchets, conteneurs ou autres produits flottants à la surface d'un milieu aqueux, tel que mer, rivière, ce dispositif, destiné à être tracté par un ou deux bateaux, étant constitué essentiellement d'au moins une poche filtrante, telle qu'un chalut, de confinement des articles à ramasser et d'une structure sur laquelle la poche de confinement est fixée, caractérisé en ce que la poche de confinement est fixée, de manière séparable, sur l'ensemble de sa longueur, à ladite structure formant sensiblement un U en plan horizontal pour permettre un maintien en position allongée de cette poche par rapport à la surface de l'eau, ladite structure en U, à l'intérieur de laquelle la poche est logée, étant une structure gonflable fixée à l'extérieur de la poche et qui, à l'état gonflé, maintient au moins une partie de la poche, en particulier côté ouverture de ladite poche, au-dessus et/ou au niveau de la surface de l'eau, cette structure gonflable se prolongeant au-delà de l'ouverture de la poche de confinement, sous forme de deux bras d'allure divergente, pour former un guide d'entrée des articles flottants vers l'ouverture de la poche, une armature rigide ou gonflable en forme d'arceau étant prévue au voisinage de l'ouverture d'entrée de la poche de confinement, cette armature étant maintenue en position dressée de l'arceau par deux porte-arceaux constitués chacun d'au moins un élément disposé au voisinage de la zone de liaison entre bras et structure gonflable et solidarisé au bras et/ou à la structure gonflable, chaque porte-arceau servant à recevoir un montant d'arceau, le sommet de l'arceau servant à la fixation, de préférence par l'intermédiaire de sangle, d'un bord dit bord supérieur de la poche de confinement.

Ainsi, l'ouverture de la poche se trouve de manière avantageuse au moins en partie au-dessus du niveau de la mer et en dessous dudit niveau de la mer, de sorte que les produits flottants entrent dans la poche par ladite ouverture qui, en quelque sorte, les avale. Mais de plus, le reste de la poche se trouve maintenu sur toute la longueur de la poche dans une position sensiblement horizontale dans laquelle ouverture et fond de la poche sont disposés sur une même ligne avec le plan de l'ouverture de la poche s'étendant sensiblement perpendiculairement à la surface de la mer de telle sorte que les produits peuvent pénétrer jusqu'au fond dudit chalut garantissant que le dispositif de ramassage selon l'invention est d'une efficacité optimale.

De préférence, la poche du chalut comporte un lest fixé, par exemple, sur la poche de manière à se trouver en regard d'une structure gonflable.

La poche du chalut est de préférence une poche en toile perméable à l'eau mais imperméable aux hydrocarbures.

De manière très avantageuse, le dispositif selon l'invention est jetable. Ainsi, la poche de confinement qui est aisément séparable du reste du dispositif peut être jetée avec son contenu. La structure gonflable du dispositif est alors utilisable avec une nouvelle poche.

En variante, la séparation de la poche de la structure gonflable du dispositif selon l'invention permet également d'amener son contenu vers un poste de retraitement dudit contenu et ainsi une récupération de ladite poche après vidange pour une nouvelle utilisation.

La présente invention permet donc une réutilisation de l'ensemble du dispositif poche/structure gonflable, et à tout le moins de la structure gonflable ce qui n'est pas toujours le cas pour les dispositifs précédemment proposés.

Cette séparation de la structure gonflable de la poche est avantageusement possible parce que la structure gonflable se trouve à l'extérieur de la poche, permettant ainsi d'éviter tout contact direct entre les hydrocarbures contenus dans la poche et la structure gonflable.

Ainsi avant utilisation, l'ensemble poche et structure gonflable non gonflée est prêt à l'emploi et facilement transportable, l'ensemble pouvant être plié ou enroulé autour d'un enrouleur de chaluts. En utilisation, la structure gonflable est gonflée et la poche de confinement se trouve alors partiellement hors de l'eau pour ramasser les déchets. Une fois les produits à ramasser introduits dans la poche de confinement et le fond de la poche rempli, celle-ci peut être refermée à l'aide d'un câble de fermeture et le polluant ainsi confiné peut alors être amené à un endroit précis de récupération.

Puisqu'il est possible de séparer la structure gonflable de la poche pour jeter ladite ou retraiter contenu de la poche,

Le dispositif selon l'invention est donc, peu encombrant puisque plié ou enroulé sur des enrouleurs de chalut et, par conséquent, facilement transportable sur des bateaux pour atteindre le point d'intervention. De plus, il peut être laissé à disposition sur des bâtiments tels que chalutiers, bateaux militaires et autres, ce qui permet son utilisation dès que nécessaire.

On décrira maintenant l'invention plus en détail en référence au dessin dans lequel:

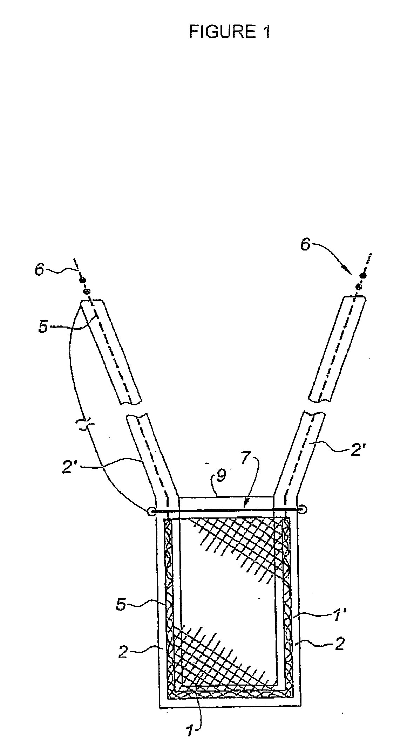

la figure 1 représente de manière schématique une vue du dessus d'un dispositif de ramassage selon l'invention ;

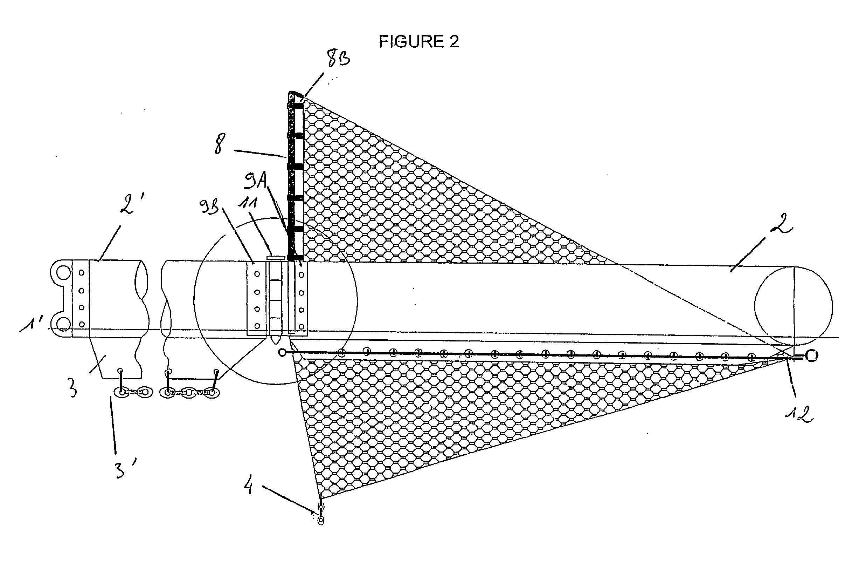

la figure 2 représente de manière schématique une vue de côté du dispositif selon la figure 1 ;
la figure 3 représente, de manière schématique, une vue partielle de dessus du dispositif de la figure 2 ;
la figure 4 représente une vue schématique de détail de la liaison du bras à la structure gonflable de la figure 2 et

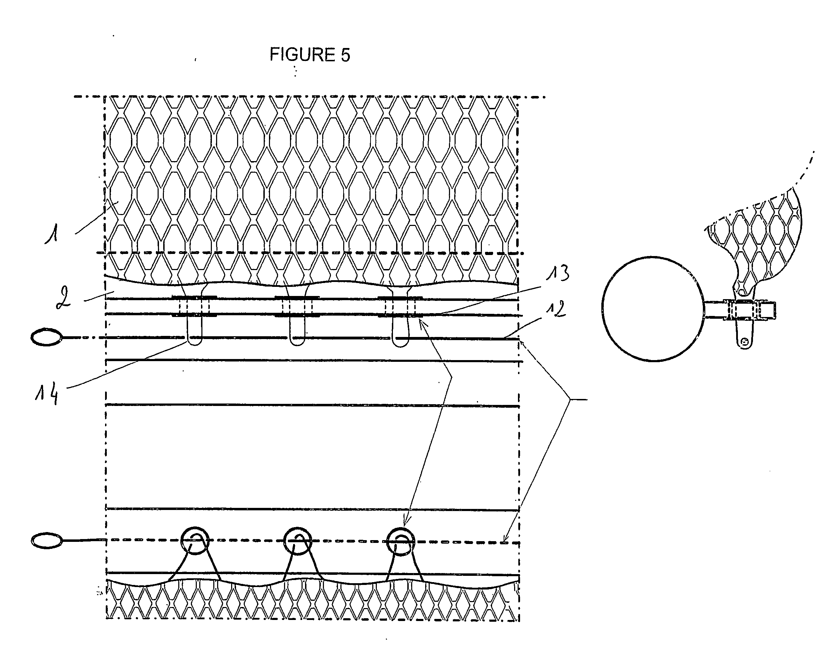

la figure 5 représente une vue de face des moyens de liaison de la poche à la structure gonflable.

Comme mentionné ci-dessus, le dispositif de ramassage, objet de l'invention, permet le ramassage d'articles divers, tels que déchets, conteneurs ou autres, flottant à la surface d'un milieu aqueux, tel que mer, rivière ou similaire.

Ce dispositif de ramassage est constitué essentiellement d'au moins une poche 1 filtrante, généralement de type filet, servant au confinement des articles à ramasser et d'une structure 2 sur laquelle la poche 1 de confinement est fixée. Ce dispositif de ramassage est tracté par un ou deux bateaux. De manière caractéristique à l'invention, la poche 1 de confinement est fixée sur l'ensemble de sa longueur à la structure 2 pour permettre un maintien en position allongée de cette poche par rapport à la surface de l'eau. Cette poche peut affecter la forme classique d'un chalut et comporte à cet effet une ouverture et un fond. La structure 2 est quant à elle une structure gonflable qui, à l'état gonflé, maintient au moins une partie de la poche 1 en particulier côté ouverture de ladite poche au-dessus et/ou au niveau de la surface de l'eau. Cette combinaison permet ainsi de remplir la totalité de la poche puisque son maintien, en position allongée, rend l'ensemble du volume de la poche accessible et empêche les articles à ramasser de passer au-dessus du bord supérieur de l'ouverture de la poche, en particulier lorsque le dispositif est traîné à la surface de la mer et que cette mer est démontée.

De préférence, la structure 2 gonflable maintient sur la quasi-totalité de sa longueur au moins une partie de la poche 1 de confinement au-dessus et/ou sensiblement au niveau de la surface 1' de la mer. Il est à noter que la poche de confinement 1 se présente sous forme d'une enveloppe double constituée de préférence sous forme de deux poches logées l'une à l'intérieur de l'autre, la poche externe formant renfort étant réalisée en un matériau présentant une élasticité inférieure à celle du matériau constituant la poche interne de confinement. Cette poche de confinement 1 est une poche en toile perméable à l'eau mais imperméable aux hydrocarbures.

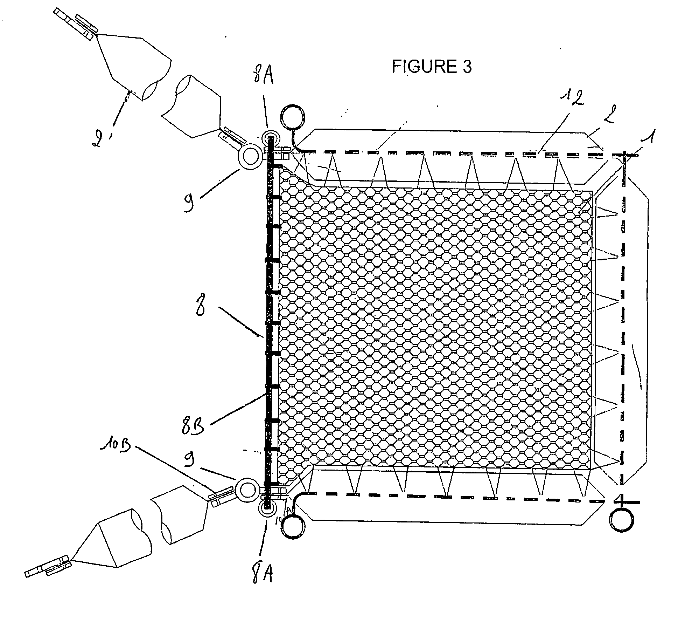

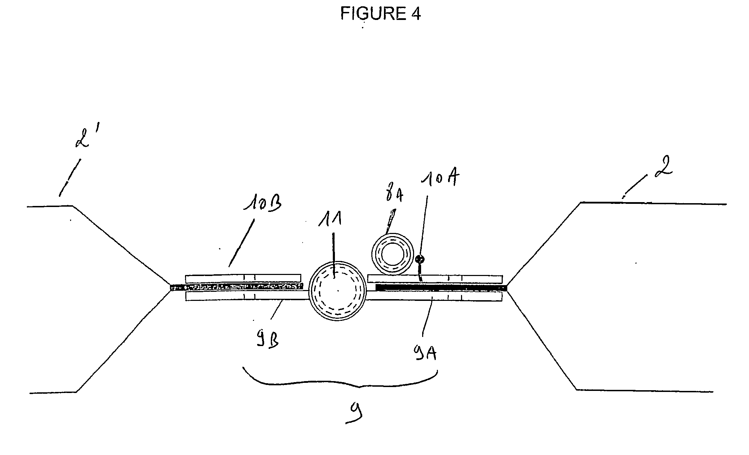

La structure 2 gonflable se prolonge quant à elle au-delà de l'ouverture de la poche de confinement 1, sous forme de deux bras 2' d'allure divergente, pour former un guide d'entrée des articles flottants vers l'ouverture de la poche 1 du chalut. Chaque bras 2' est relié au reste de la structure gonflable 2 par l'intermédiaire d'une liaison 9 démontable telle qu'une liaison articulée de type charnière. Cette liaison 9 de type charnière est constituée de deux éléments 9B, 9A respectivement solidaires l'un 9B d'un bras 2, l'autre 9A du reste de la structure gonflable 2. Ces éléments 9A, 9B de charnière 9 sont assemblés l'un à l'autre par l'intermédiaire d'un axe 11 démontable autorisant une séparation rapide entre le bras 2' et le reste de la structure gonflable 2. Ainsi, ces éléments 9A, 9B sont réalisés sous forme de gonds assemblables l'un à l'autre par l'intermédiaire d'un axe 11 introduit à l'intérieur desdits gonds. Chaque élément est en outre muni d'une plaque qui peut être associée à une contreplaque, représentée en 10A, 10B aux figures, de manière à enserrer entre plaques et élément 9A ou 9B une aile du bras 2' ou du reste de la structure gonflable 2. Ce mode de réalisation est plus particulièrement représenté aux figures 3 et 4. La présence de cette liaison de type charnière permet d'une part de faire varier à volonté l'angle formé entre les bras 2' de manière à ouvrir plus ou moins l'entonnoir formé par lesdits bras, d'autre part de faciliter la séparation du bras 2' du reste de la structure gonflable 2, le simple enlèvement de l'axe 11 permettant une telle séparation.

Dans les exemples représentés, chaque bras 2' se présente de préférence sous forme d'au moins un boudin gonflable et est muni à sa base, le long de ses génératrices, d'une jupe 3 lestée par l'intermédiaire de chaîne de lestage représentée en 3' aux figures. La structure 2 gonflable est quant à elle constituée d'une pluralité de poutres gonflables formant sensiblement un U en plan horizontal, c'est-à-dire un U couché. Cette structure gonflable pourrait de manière similaire être constituée de deux poutres gonflables s'étendant parallèles l'une à l'autre et d'une troisième poutre s'étendant perpendiculairement auxdites poutres parallèles. Il pourrait également s'agir d'une structure constituée d'une seule pièce gonflable en U couché. La poche 1 de confinement est destinée à être logée à l'intérieur du U. Cette poche 1 présente de préférence un lest 4 fixé à la poche 1 en regard de la structure gonflable. Ce lest peut être ménagé continu ou discontinu sous forme d'un U suivant celui de la structure gonflable 2.

Pour permettre le maintien de la poche 1 de confinement à un niveau correspondant à celui souhaité, il est prévu, au voisinage de l'ouverture d'entrée de la poche de confinement 1, une armature gonflable ou rigide en forme d'arceau 8, un bord de l'ouverture de la poche 1 étant fixé sur cette armature en arceau 8. L'armature en forme d'arceau 8 est maintenue, en position dressée de l'arceau 8, par deux porte-arceaux 8A constitués chacun d'au moins un élément, de préférence tubulaire, disposé au voisinage de la zone de liaison entre bras 2' et structure gonflable 2 et solidarisé au bras 2 et/ou à la structure gonflable 2, chaque porte-arceau 8A servant à recevoir, de manière amovible, un montant d'arceau 8, le sommet de l'arceau 8 servant à la fixation, de préférence par l'intermédiaire de sangle 8B, d'un bord dit bord supérieur de la poche 1 de confinement.

Dans l'exemple représenté, la structure gonflable est équipée, au voisinage de sa zone de liaison avec les bras 2', de porte arceaux 8A destinés chacun à recevoir, de manière amovible, un montant d'arceau 8. Le sommet de l'arceau 8 sert à la fixation, de préférence par l'intermédiaire de sangle 8B, d'un bord dit bord supérieur de la poche 1 de confinement.

Bien évidemment, d'autres modes de réalisation dans lesquels il est prévu, au voisinage de l'ouverture d'entrée de la poche de confinement 1, une armature gonflable ou rigide en forme d'arceau 8, un bord de l'ouverture de la poche 1 étant fixé sur cette armature en arceau 8 peuvent être imaginés. Grâce à cette configuration, au moins une partie de la poche 1 de confinement se trouve au-dessus du niveau de la surface de l'eau lorsque la structure gonflable 2 est gonflée. Ce gonflage de la structure gonflable 2 intervient lorsque le dispositif de ramassage est mis à l'eau pour réaliser sa fonction de ramassage.

La poche 1 de confinement est reliée à la structure 2 gonflable par un câble 12 de retenue enfilé à l'intérieur de garcettes en forme de boucle 14 solidaires de la poche 1 de confinement. Ces garcettes 14 sont préalablement introduites au travers d'oeillets 13 solidaires de la structure gonflable 2 de manière à faire saillie de ces oeillets. Le câble 12 est alors enfilé à l'intérieur de cette portion en saillie des garcettes 14 pour permettre une solidarisation de la structure 2 gonflable et de la poche 1 de confinement. La désolidarisation structure gonflable/poche est obtenue par simple enlèvement du câble 12 de retenue. Ces différentes liaisons de la poche 1 de confinement à l'arceau 8 d'une part, à la structure 2 gonflable d'autre part, permettent, une fois le dispositif de ramassage à la mer et l'opération de ramassage effectuée, de séparer très rapidement les différents éléments du dispositif de ramassage les uns des autres. Ainsi, dans un premier temps, les bras 2' sont séparés du reste de la structure gonflable par enlèvement de l'axe 11 de la charnière puis l'arceau 8 est enlevé en coupant simplement les garcettes ou boucle 8B reliant la poche 1 de confinement à l'arceau 8. Enfin, il suffit ensuite d'enlever le câble 12 de retenue pour séparer définitivement la structure gonflable 2 de la poche 1 de confinement. Ces opérations peuvent donc s'effectuer en quelques dizaines de minutes. Une fois la poche récupérée et désolidarisée de la structure 2 gonflable, celle-ci peut être mise dans un conteneur et le fuel contenu dans la poche pourra être réutilisé par exemple dans une cimenterie en tant que combustible. Il est donc, dans certaines applications, primordial que la structure gonflable 2, les bras 2' et la poche 1 de confinement soient aisément séparables les uns des autres. Dans un autre mode de réalisation non représenté, le fond de la poche 1 de confinement est muni d'une fermeture à glissière pour permettre une vidange de la poche 1 et sa réutilisation. Dans ce cas, la poche 1 est réutilisable.

Comme mentionné ci-dessus, le dispositif de ramassage selon l'invention est tracté généralement par deux bateaux à l'aide d'un lien, tel qu'un câble ou une sangle de traction 5, qui suit de préférence la ligne de la structure gonflable 2 de manière à répartir au mieux l'effort de traction sur le dispositif. Ce câble ou sangle de traction 5 est relié à un câble 6 en liaison avec le bateau par l'intermédiaire d'un émerillon.

L'ouverture de la poche 1 est quant à elle munie d'un câble de fermeture 7 qui est actionnable à distance. Ainsi, une fois la poche 1 remplie de déchets à ramasser, l'actionnement dudit câble 7 permet de fermer la poche et de retenir dedans les déchets. Le dispositif de ramassage peut alors être hissé à bord d'un des bateaux ou être tracté jusqu'à un site de récupération de déchets. La poche 1 peut alors être séparée de la structure 2 pour permettre sa vidange.

Selon le type de déchets à ramasser, la structure gonflable du dispositif selon l'invention peut également comporter une poutre transversale positionnée à l'ouverture de la poche de confinement 1.

De préférence, un câble, non représenté, est également mis en place à l'entrée de la poche de confinement 1 de manière à définir une largeur maximale d'ouverture de ladite poche de confinement 1.

## Revendications

1. Dispositif de ramassage d'articles divers, tels que déchets, conteneurs ou autres produits flottants à la surface d'un milieu aqueux, tel que mer, rivière, ce dispositif, destiné à être tracté par un ou deux bateaux, étant constitué essentiellement d'au moins une poche (1) filtrante, telle qu'un chalut, de confinement des articles à ramasser et d'une structure (2) sur laquelle la poche (1) de confinement est fixée,
**caractérisé en ce que** la poche de confinement (1) est fixée, de manière séparable, sur l'ensemble de sa longueur, à ladite structure (2) formant sensiblement un U en plan horizontal pour permettre un maintien en position allongée de cette poche (1) par rapport à la surface de l'eau, ladite structure (2) en U, à l'intérieur de laquelle la poche est logée, étant une structure gonflable fixée à l'extérieur de la poche (1) et qui, à l'état gonflé, maintient au moins une partie de la poche (1), en particulier côté ouverture de ladite poche (1), au-dessus et/ou au niveau de la surface de l'eau, cette structure (2) gonflable se prolongeant au-delà de l'ouverture de la poche de confinement (1), sous forme de deux bras (2') d'allure divergente, pour former un guide d'entrée des articles flottants vers l'ouverture de la poche (1), une armature rigide ou gonflable en forme d'arceau (8) étant prévue au voisinage de l'ouverture d'entrée de la poche (1) de confinement, cette armature étant maintenue en position dressée de l'arceau (8) par deux porte-arceaux (8A) constitués chacun d'au moins un élément disposé au voisinage de la zone de liaison entre bras (2') et structure gonflable (2) et solidarisé au bras (2') et/ou à la structure gonflable (2), chaque porte-arceau (8A) servant à recevoir de manière amovible, un montant d'arceau (8), le sommet de l'arceau (8) servant à la fixation, de préférence par l'intermédiaire d'une sangle (8B), d'un bord dit bord supérieur de la poche (1) de confinement.

2. Dispositif selon la revendication 1,
**caractérisé en ce que** la structure (2) gonflable maintient sur la quasi-totalité de sa longueur au moins une partie de la poche (1) de confinement au-dessus et/ou sensiblement au niveau de la surface (1') de l'eau.

3. Dispositif selon la revendication 1,
**caractérisé en ce que** chaque bras (2') est relié au reste de la structure gonflable (2) par l'intermédiaire d'une liaison (9) démontable pour permettre une séparation rapide des bras (2') du reste de la structure gonflable (2).

4. Dispositif selon l'une des revendications 1 à 3,
**caractérisé en ce que** chaque bras (2') est relié au reste de la structure gonflable (2) par une liaison articulée de type charnière.

5. Dispositif selon la revendication 4,
**caractérisé en ce que** la liaison (9) démontable de type charnière est constituée de deux éléments (9B, 9A) respectivement solidaires l'un (9B) d'un bras (2), l'autre (9A) du reste de la structure gonflable (2), lesdits éléments (9A, 9B) de charnière (9) étant assemblés l'un à l'autre par l'intermédiaire d'un axe (11) démontable autorisant une séparation rapide entre bras (2') et reste de la structure gonflable (2).

6. Dispositif selon l'une des revendications 1 à 4,
**caractérisé en ce que** chaque bras (2') se présente de préférence sous forme d'au moins un boudin gonflable et est muni à sa base, le long de ses génératrices, d'une jupe (3) lestée.

7. Dispositif selon l'une des revendications 1 à 6,
**caractérisé en ce que** la poche (1) de confinement est reliée à la structure (2) gonflable par un câble (12) de retenue enfilé à l'intérieur de garcettes en forme de boucle (14) solidaires de la poche (1) de confinement et faisant saillie au travers d'oeillets (13) solidaires de la structure gonflable (2), la désolidarisation structure gonflable/poche étant obtenue par simple enlèvement du câble (12) de retenue.

8. Dispositif selon l'une des revendications 1 à 7,
**caractérisé en ce que** la poche (1) de confinement se présente sous forme de deux poches logées l'une à l'intérieur de l'autre, la poche externe formant renfort étant réalisée en un matériau présentant une élasticité inférieure à celle du matériau constituant la poche interne de confinement.

9. Dispositif selon l'une des revendications 1 à 8,
**caractérisé en ce que** le fond de la poche (1) de confinement est muni d'une fermeture à glissière pour permettre une vidange de la poche (1) et sa réutilisation.

10. Dispositif selon l'une des revendications 1 à 9,
**caractérisé en ce que** la structure gonflable (2), les bras (2') et la poche (1) de confinement sont séparables les uns des autres.

## Claims

1. Device for picking up miscellaneous items, such as waste matter, containers or other products floating on the surface of an aqueous medium, such as the sea, or a river, this device, intended to be towed by one or two boats, being constituted essentially by at least one filter bag (1), such as a trawl net, in which to confine the items to be picked up and by a structure (2) to which the confinement bag (1) is fastened, **characterised in that** the confinement bag (1) is fastened, in a detachable way, over the whole of its length, to said structure (2) substantially forming a U-shape in a horizontal plane in order to allow this bag (1) to be maintained in an elongated position relative to the surface of the water, said U-shaped structure (2), within which the bag is housed, being an inflatable structure fastened to the outside of the bag (1) and which, in its inflated state, keeps at least one part of the bag (1) in particular on the side of the opening of said bag (1) above and/or level with the surface of the water, this inflatable structure (2) being extended beyond the opening of the confinement bag (1) in the form of two arms (2') of divergent appearance, so as to form an input guide for items floating towards the opening of the bag (1), a rigid or inflatable frame in the form of a hoop (8) being provided in the vicinity of the input opening of the confinement bag (1), this frame being held in the upright position of the hoop (8) by two hoop-carriers (8A) each constituted by at least one element placed in the vicinity of the connection area between arms (2') and inflatable structure (2) and anchored to the arm (2') and/or to the inflatable structure (2), each hoop-carrier (8A) being used to receive in a removable manner one hoop (8) upright, the top of the hoop (8) being used to fasten, preferably by means of a piece of webbing (8B), one edge known as the upper edge of the confinement bag (1).

2. Device according to claim 1, **characterised in that** the inflatable structure (2) keeps over almost the entirety of its length at least one part of the confinement bag (1) above and/or substantially level with the surface (1') of the water.

3. Device according to claim 1, **characterised in that** each arm (2') is connected to the rest of the inflatable structure (2) by means of a removable connection (9) to allow a rapid separation of the arms (2') from the rest of the inflatable structure (2).

4. Device according to one of claims 1 to 3, **characterised in that** each arm (2') is connected to the rest of the inflatable structure (2) by an articulated connection of the hinge type.

5. Device according to claim 4, **characterised in that** the removable hinge type connection (9) is constituted by two elements (9B, 9A) respectively integral one (9B) with one arm (2), the other (9A) with the rest of the inflatable structure (2), said hinge elements (9A, 9B) being assembled one to the other by means of a pin (11) that can be removed to allow a rapid separation between arms (2') and rest of the inflatable structure (2).

6. Device according to one of claims 1 to 4, **characterised in that** each arm (2') is presented preferably in the form of a least one inflatable ring and is fitted at its base, along its generators, with a ballasted skirt (3).

7. Device according to one of claims 1 to 6, **characterised in that** the confinement bag (1) is connected to the inflatable structure (2) by a retaining cable (12) threaded inside small pieces of rigging shaped into loops (14) integral with the confinement bag (1) and projecting through eyelets (13) integral with the inflatable structure (2), the inflatable structure being separated from the bag simply by removing the retaining cable (12).

8. Device according to one of claims 1 to 7, **characterised in that** the confinement bag (1) is presented in the form of two bags housed one inside the other, the reinforcing outer bag being made of a material that has less resilience than the material constituting the inner confinement bag.

9. Device according to one of claims 1 to 8, **characterised in that** the bottom of the confinement bag (1) is fitted with a slide closure so that the bag (1) can be emptied and re-used.

10. Device according to one of claims 1 to 9, **characterised in that** the inflatable structure (2), the arms (2') and the confinement bag (1) can be separated from each other.

## Patentansprüche

1. Vorrichtung zum Auffangen von auf der Oberfläche eines Gewässers, beispielsweise eines Meeres oder Flusses, schwimmenden Gegenständen wie Abfällen, Behältern oder sonstigen Produkten, die von einem oder zwei Booten gezogen werden soll und im Wesentlichen wenigstens einen Filtersack (1), beispielsweise ein Schleppnetz, zum Einschließen der aufzufangenden Gegenstände, und einen Rahmen (2) umfasst, an dem der Auffangsack (1) befestigt ist, **dadurch gekennzeichnet, dass** der Auffangsack (1) über seine gesamte Länge mit dem Rahmen (2) trennbar verbunden ist und in horizontaler Ebene im Wesentlichen ein U bildet, um den Sack in ausgebreiteter Position zur Wasseroberfläche zu halten, wobei der U-förmige Rahmen, in dem der Sack angebracht ist, aufblasbar und an der Außenseite des Sacks (1) befestigt ist und im aufgeblasenen Zustand mindestens einen Teil des Sacks (1), insbesondere auf der offenen Seite des Sacks (1), über und/oder auf Höhe der Wasseroberfläche hält, wobei sich der aufblasbare Rahmen (2) in Form von zwei auseinander laufenden Schenkeln (2') über die Öffnung des Auffangsacks (1) erstreckt und so eine Einlassführung für zur Öffnung des Sacks (1) schwimmende Gegenstände bildet, wobei in der Nähe der Einlassöffnung des Auffangsacks (1) ein starres oder aufblasbares Gerüst in Form eines Bogens (8) vorgesehen ist, wobei das Gerüst von zwei Bogenhaltern (8A), die jeweils wenigstens ein in der Nähe des Verbindungsbereichs zwischen dem Schenkel (2') und dem aufblasbaren Rahmen (2) angeordnetes Element umfassen und mit dem Schenkel (2') und/oder mit dem aufblasbaren Rahmen (2) verbunden sind, in aufrechter Position des Bogens (8) gehalten wird, wobei jeder Bogenhalter (8A) eine Bogenstütze (8) beweglich aufnimmt, wobei der Scheitel des Bogens (8) vorzugsweise über einen Gurt (8B) zur Befestigung eines Randes, oberer Rand des Auffangsacks (1) genannt, dient.

2. Vorrichtung nach Anspruch 1, **dadurch gekennzeichnet, dass** der aufblasbare Rahmen (2) über nahezu seine gesamte Länge wenigstens einen Teil des Auffangsacks (1) über und/oder im Wesentlichen auf Höhe der Wasseroberfläche (1') hält.

3. Vorrichtung nach Anspruch 1, **dadurch gekennzeichnet, dass** jeder Schenkel (2') über eine demontierbare Verbindung (9) mit dem Rest des aufblasbaren Rahmens (2) verbunden ist, um die Schenkel (2') schnell vom Rest des aufblasbaren Rahmens (2) trennen zu können.

4. Vorrichtung nach einem der Ansprüche 1 bis 3, **dadurch gekennzeichnet, dass** jeder Schenkel (2') über eine Gelenkverbindung vom Typ Scharnier mit dem Rest des aufblasbaren Rahmens (2) verbunden ist.

5. Vorrichtung nach Anspruch 4, **dadurch gekennzeichnet, dass** die demontierbare Verbindung (9) vom Typ Scharnier zwei Elemente (9B, 9A) umfasst, von denen eins (9B) mit einem Schenkel (2') und das andere (9A) mit dem Rest des aufblasbaren Rahmens (2) verbunden ist, wobei die Elemente (9A, 9B) des Scharniers (9) über eine demontierbare Achse (11) zusammengebaut sind, was eine rasche Trennung der Schenkel (2') vom Rest des aufblasbaren Rahmens (2) ermöglicht.

6. Vorrichtung nach einem der Ansprüche 1 bis 4, **dadurch gekennzeichnet, dass** jeder Schenkel (2') vorzugsweise in Form mindestens eines aufblasbaren Wulstes vorliegt und auf seiner Unterseite entlang seiner Kanten mit einer mit Ballast versehenen Schürze (3) ausgestattet ist.

7. Vorrichtung nach einem der Ansprüche 1 bis 6, **dadurch gekennzeichnet, dass** der Auffangsack (1) mit dem aufblasbaren Rahmen (2) über ein Halteseil (12) verbunden ist, das in schleifenförmige Bändsel (14) eingefädelt ist, die mit dem Auffangsack (1) verbunden sind und durch Ösen (13), die mit dem aufblasbaren Rahmen (2) verbunden sind, hinausragen, wobei der aufblasbare Rahmen und der Auffangsack durch einfaches Herausziehen des Halteseils (12) voneinander getrennt werden können.

8. Vorrichtung nach einem der Ansprüche 1 bis 7, **dadurch gekennzeichnet, dass** der Auffangsack (1) in Form von zwei Säcken vorliegt, die ineinander angeordnet sind, wobei der äußere Sack, der eine Verstärkung bildet, aus einem Material besteht, dass eine niedrigere Elastizität aufweist, als das Material, aus dem der innere Auffangsack besteht.

9. Vorrichtung nach einem der Ansprüche 1 bis 8, **dadurch gekennzeichnet, dass** der Auffangsack (1) mit einem Reißverschluss versehen ist, um ein Leeren des Sacks (1) und seine Wiederverwendung zu ermöglichen.

10. Vorrichtung nach einem der Ansprüche 1 bis 9, **dadurch gekennzeichnet, dass** der aufblasbare Rahmen (2), die Schenkel (2') und der Auffangsack (1) voneinander trennbar sind.
